# EUROPEAN PATENT SPECIFICATION

(11) **EP 1 920 559 B1**
(45) Date of publication and mention of the grant of the patent: **19.05.2010**
(21) Application number: 06775951.4
(22) Date of filing: 29.08.2006
(51) Int. Cl.: H04L 12/28, H04N 7/10, H04M 11/06

(54) **A MODULE FOR THE DISTRIBUTION OF COMMUNICATIONS SIGNALS**
MODUL ZUR ERTEILUNG VON KOMMUNIKATIONSSIGNALEN
MODULE SERVANT A LA DISTRIBUTION DE SIGNAUX DE COMMUNICATIONS

(30) Priority: 31.08.2005 DK 200501216
(43) Date of publication of application: 14.05.2008
(73) Proprietor: Schneider Electric Danmark A/S, 2750 Ballerup (DK)
(72) Inventor: KIRÁLYFALVY, Tamás, DK-2640 Hedehusene (DK); MADSEN, Jakob, Winther, DK-2300 Copenhagen S. (DK)
(74) Representative: Wittrup, Flemming
(86) International application number: PCT/DK2006/000464
(87) International publication number: WO 2007/025542

(56) References cited:
- EP-A1- 1 061 741
- EP-A2- 0 352 210
- WO-A-02/37820
- WO-A-99/63628
- WO-A-03/028370
- WO-A-03/081268
- WO-A2-00/31953
- WO-A2-2004/105194
- FR-A1- 2 806 572
- GB-A- 2 378 874
- US-A- 6 072 793
- US-A- 6 160 843

## Description

The invention relates to a module for the distribution of communications signals in a building or the like which is provided with a number of connectors that are connected to the module via a wiring network in the building, said wiring network comprising a cable with a number of pairs of twisted wires.

In pace with the increasing use of multimedia communication the need increases for buildings being equipped with a wiring network which is able to transmit not only data and telephony signals, but also multimedia signals, ie signals at a significantly higher frequency. Typically telephone signals are between 2 and 8 kHz, data signals are typically as high as 100 kHz, whereas multimedia signals are within the RF area, typically as high as 1000 MHz. The strength of the multimedia signals is moreover significantly lower than the strength of the telephony and data signal strengths, and in order to be able to propagate the signals effectively and without a risk of crosstalk, coaxial cables have so far been used that were dedicated to the multimedia signals. In order to avoid separate wiring networks for the various applications, twisted pairs of cables have gained use also for multimedia signals, which is, however, associated with a number of drawbacks.

The object of the invention is to provide a module for the distribution of communication signals and multimedia signals that can be distributed simultaneously via a shared wiring network, and wherein the multimedia signal can be transmitted effectively across the distances that are typical for a building. This object is achieved in that the module comprises signal outputs that are connected to respective terminals in some connectors and each of which comprises means for individual adaptation of a respective output signal.

For instance, by combining these features with an arrangement of the kind known eg from WO 00/31953 and FR2 806 572 A1, it is possible to achieve complete flexibility and optimal signal transmission even for weak, relatively high-frequent signals. Thus, the invention provides both propagation via a shared wiring network and optimal distribution of the signal. Due to the adjustable optimal transmission conditions it is also accomplished by the invention that all types of signals can be propagated simultaneously in the cable which Is connected to a respective connector and which may comprise eg four pairs of twisted wires.

However, the same multimedia signal is often to be emitted to several connectors, and in accordance with a preferred embodiment the signal outputs that have means for individual adaptation are permanently wired to the respective connectors. Thereby the module is ensured against users subsequently disturbing the adaptation. For instance, the arrangement known from WO 00/31953 is based on a patch panel and an amplifier for converting a multimedia signal that can be emitted to a connector. Individual adaptation is not possible, but even If that had been the case, it would have been destroyed when the user moves the patch cable.

Preferably the individual adaptation comprises an Individual adjustment of the amplifier characteristic of each signal output and preferably also comprises a conversion of the signal from unbalanced to balanced form. In the latter case, a back-conversion is to be performed, which is typically performed in a connecting cable between a connector and a receiver apparatus.

Compared to the prior art the invention is further suitable for use in connection with the prior art known per se for turning off an output amplifier In case a receiver apparatus is not connected to the connector. This is preferably done by detection of a DC signal level at the respective output on the module.

Highly advantageously, the module according to the invention can be combined with what is also known from WO 00/31953; viz that the module has input signals for other telephony and data signals that can be transmitted to the connectors in the building. Thus, the module according to the invention may have several input ports for receiving telephony and data signals, and those ports may be connected by means of a patch cable in order to thereby enable determination of which data signals are to be transferred into the module for transmission via the wiring network to the individual connectors. Alternatively a patch panel can be used between the module according to the invention and the wiring network, except from the outputs on the module that were pre-selected for secure wiring.

According to a preferred embodiment a connector comprises eight terminals, two of which are dedicated to analog high-frequency signals, while the other two are dedicated to telephony signals. The remaining four terminals are reserved for digital input and output signals. The digital terminal of each connector is, according to a preferred embodiment, permanently wired to the module which may, in turn, be provided with selector means whereby it is possible to select which digital input and output signals are advanced/returned to the connectors. For instance, according to one embodiment the module may have switches for selection between a number of telephony input signals.

It applies in general to the invention that data and telephony as well as multimedia signals can be propagated in both directions, whereby everything referred to as input may also serve as output, and vice versa.

Thus, the invention can also be expressed in the following terms: that it is possible to individually adjust in terms of high-frequency and sensitive signals, while nothing is made in case of rather low-frequency signals. The invention comprises all combinations of patching or switching or a combination of those options before or after the module. Obviously it is possible to construct a large diversified arrangement by means of a number of modules according to the invention.

In preferred embodiments a high-frequency input/output is connected to a cable-TV modem. By a further embodiment a telephony input/output is connected to an ADSL filter and/or connected to an a-larm unit. The telephone input/output can also be connected to a VolP (Voice over A/P) converter.

In accordance with the invention, a test box connected to the module and test units connected to respective connectors are also provided. That will make it very simple to perform the individual adaptation. During the test procedure a message is transmitted from each connector about the quality of the received signal. This information can be transmitted wirelessly, but according to a preferred embodiment it may greatly advantageously be transmitted back via the other pairs of twisted wires that are connected to the connector, whereby the individual adjustment can be performed by means of very inexpensive equipment.

The invention will be explained in further detail by the description of embodiments that follows, reference being made to the drawing, wherein:
Figure 1 shows an embodiment of a module according to the invention;
Figures 2 and 3 show various connecting options to the module shown in Figure 1;
Figure 4 shows an embodiment for conversion and back-conversion; while
Figure 5 shows a test box for use in connection with the invention.

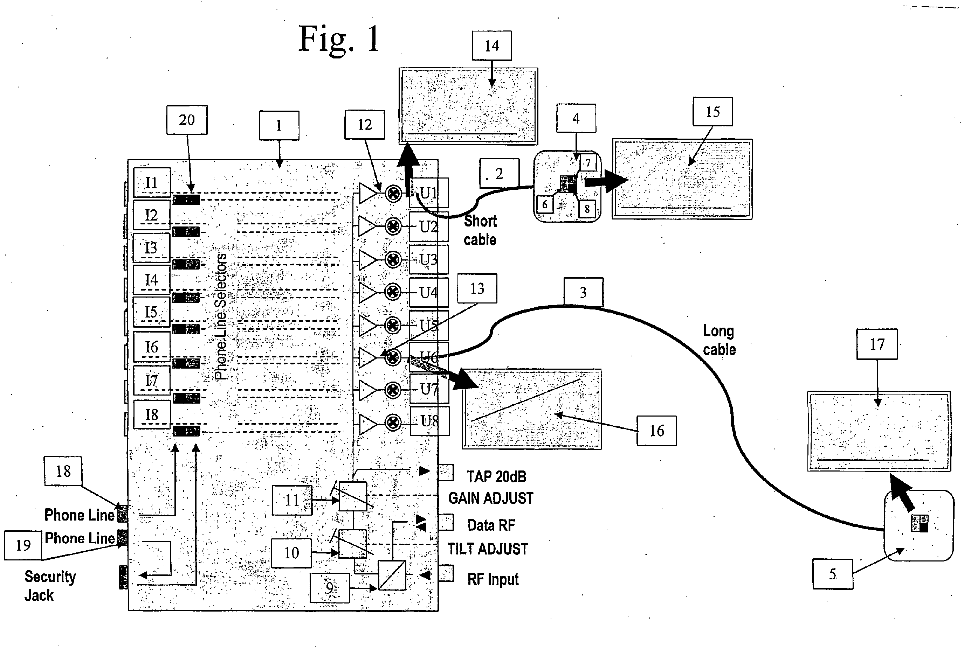

Figure 1 shows a module 1 for distributing communications signals in a building or the like. By means of cables 2, 3 the module 1 is connected to respective connectors, 4 and 5, respectively. According to a preferred embodiment each cable comprises four pairs of twisted wires that are permanently wired to respective ones of eight terminals in connectors 4, 5. Typically, four of the terminals in the connectors, see reference numeral 6, are dedicated to data in and out signals; two terminals, see reference numeral 7, are dedicated to a telephone connection; while two terminals, see reference numeral 8, are dedicated to relatively high-freqency and comparatively weak signals, respectivly, that are used ia to transmit multimedia/image information.

As outlined in Figure 1, cable 2 is a short cable, whereas cable 3 is a long cable. Thus, the invention presupposes that high-frequency/weak signals are propagated via a twisted pair of wires, about which it is known that the high frequencies are attenuated more than the low frequencies, and that the risk of interferences caused by crosstalk increases with increasing lengths of the cables.

The invention counters those drawbacks in that filter and.amplifier means are provided, whereby it is possible to individually adjust the output signals from output ports U1-U8 - eg a filter 9 is provided allowing, in the shown embodiment, only signals above 47 MHz to pass from the RF input to amplifiers 10, 11 for adjustment of tilt and gain, respectively, ie frequency characteristics and amplification, before the signal is transmitted further to outputs U1-U8. According to the invention further adjustment means are provided, eg 12 and 13, by means of which it is possible to perform an individual subsequent adjustment of the signal to the various connectors 4, 5. The output signal from U1 may typically have an amplitude/frequency characteristic as shown in box 14. Owing to the relatively short cable 2, the amplitude/frequency characteristic of output signals from the connector 4 will be similar to the signal on U1, see box 15. It is a different matter with cable 3 which is a long cable. That cable will impart an attenuation of the signal in response to the frequency and the length of the cable. Therefore, when using means 13 to change the output signal on U6 to have the amplitude/frequency characteristic that appears from box 16 in accordance with the invention, the signal will - when propagated in cable 3 and appearing as output signal from the connector 5 - have the ideal shape that appears from box 17. In this manner it can be accomplished that the signals received in the individual connectors will be the same, no matter where in the building the connector is mounted.

In principle it is possible to move cables 2, 3 around the various outputs U1-U8. In this manner one may have several RF inputs, eg two, whereby U1-U4 are connected to the one input connector, whereas U5-U8 are connected to another input connector. Thereby, by moving the cable 3 from U6 to eg U3, one may decide which RF input signal is transmitted on to the connector 5. Preferably the module 1 is configured such that there is only one RF input, whereby that signal is transmitted to all connectors, and by a preferred embodiment the twisted pairs of wires that are connected to terminals 8 in the connectors are permanently wired to ports U1-U8. Thereby it is ensured that a user is not able to move the cables around and hence destroy the adjustment made by means of means 12, 13. If for instance the wire 3 is moved from U6 to U3, a new fine adjustment of signals on the outputs is usually to be made.

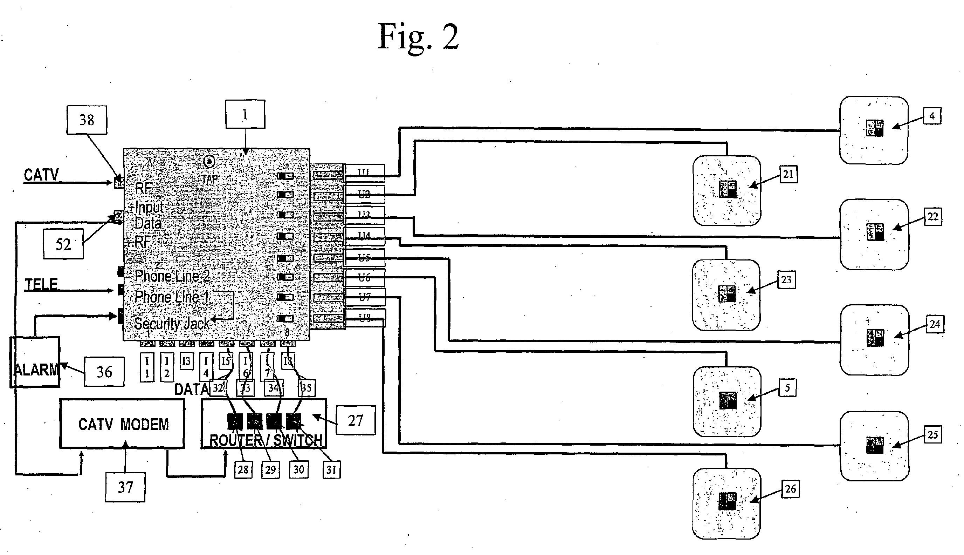

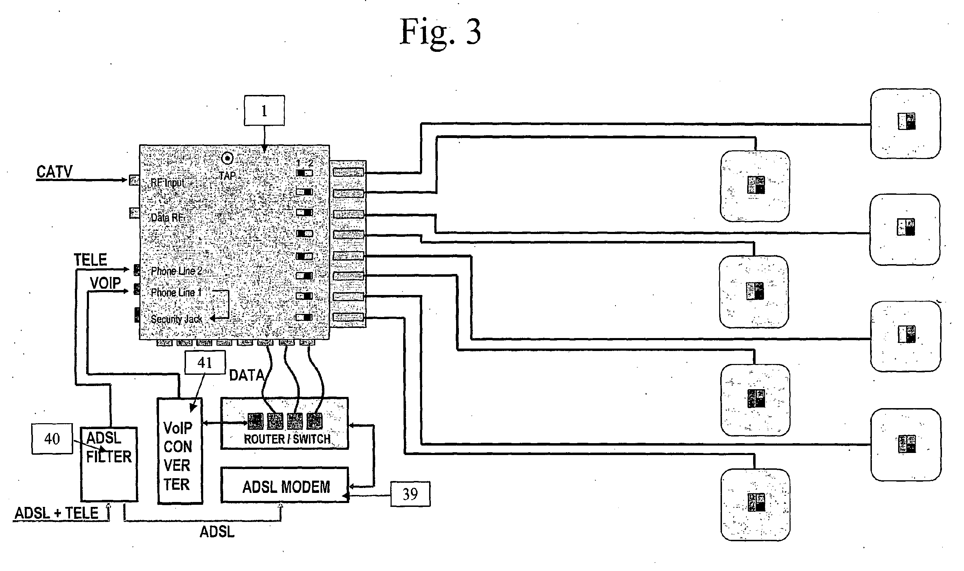

As will appear from Figure 1, module 1 also comprises eight data in/out ports 11-18. Those data signals are transferred in the module (indicated by dotted lines) to respective twisted pairs in cables 2 and 3. Those twisted pairs may be permanently wired in the module 1, in particular if a patch option is available on the input of the module 1 (see Figure 2 and 3). Alternatively a patch panel may be provided after the module 1.

Moreover the module 1 comprises connections 18 and 19 for telephone lines. In that case it would be expedient to make use of switches 20, whereby one may - irrespective of the fact that all twisted pairs in the cable 2 are permanently wired to the module 1 - switch between the one or the other telephone line by means of switches 20.

Thus there are ample opportunities for alternating between various data and telephony inputs/outputs, meaning that, by the preferred embodiment, permanently wiring of cables 2, 3 to the respective outputs on the module 1 will not impose any actual limitations to the flexibility by. By adapting the sensitive signals individually in accordance with the invention, all options are open for a flexible and optimal system.

Reference is now made to Figure 2, from where it will appear how each of outputs U1-U8 is connected to a respective connector 4, 5 and 21-26. The twisted pairs of wires are all connected in the same manner in the connectors, see the explanation given in the context of reference numerals 4, 6, 7 and 8 in Figure 1. Figure 2 also shows a router/switch 27 with connectors 28-31. Those connectors can be connected to respective ones of inputs 11-118 by means of patch cables 32-35. Thus one may decide for oneself which of outputs U1-U8 is connected to router 27. By one embodiment, an alarm circuit 36 may be connected to a telephone line in such a manner that an alarm, if any, interrupts the usual telephone connection to be able to come through to the connectors. Figure 2 also shows that data exchange for the router 27 may occur via a cable-TV modem 37 to-from a data-RF-connection 52 on the module 1. Typically a coaxial cable may be connected to the RF-input 38, whereby it is enabled, by one embodiment, to transmit both image information and data information through the coaxial cable. By the preferred embodiment the signals are split in the filter 9 as explained in the context of Figure 1.

Figure 3 shows alternative uses of the module 1 according to the invention, where an ADSL modem 39 and an ADSL filter 40 may be connected, thereby also enabling handling of ADSL signals. Moreover a VoIP-converter 41 is shown, whereby it is possible to make telephone conversations over the internet. Albeit the cables connected to connectors 4, 5 and 21-26 are, in the preferred embodiment, permanently wired to the output of U1-U8, it will appear that the module 1 is very flexible with regard to what else can be transmitted on the four pairs of twisted wires connected to the connectors.

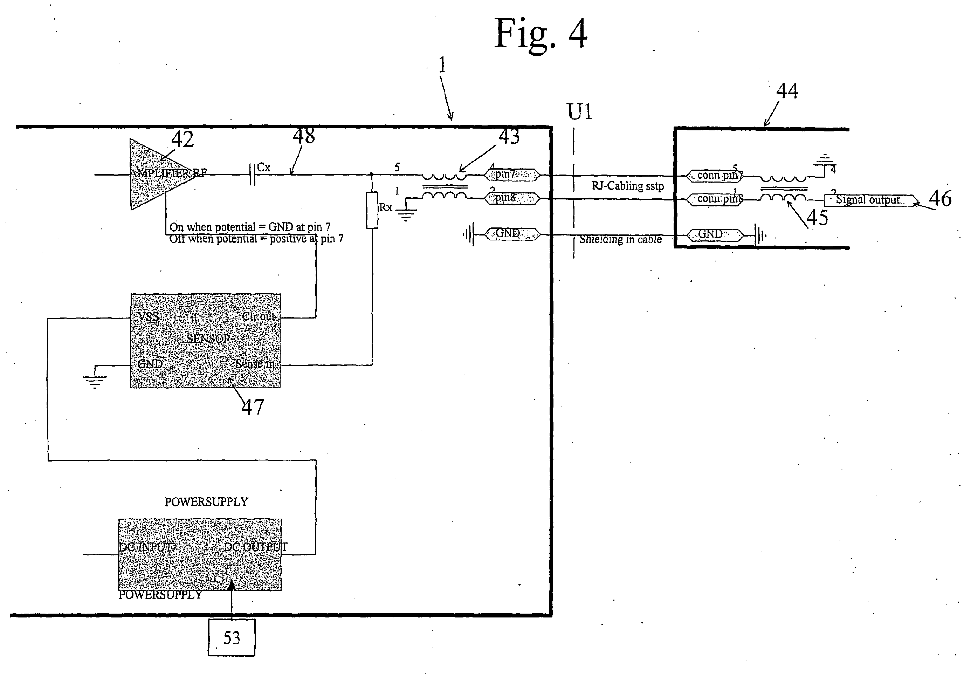

Figure 4 shows a preferred embodiment for conversion and back-conversion of the sensitive high-frequency and/or weak signals. For the sake of clarity, it is shown in module 1 only what happens in connection with the output U1. The amplifier 42 receives an unbalanced signal, typically from a coaxial cable. By means of a transformer 43, whose one winding is connected to earth, a balanced signal is accomplished that is transmitted via a pair of twisted wires, in the figures called pin 7 and 8 (see what was designated by 8 in the context of Figure 1). Thereby a balanced signal is accomplished in a manner known per se which is less sensitive to noise and crosstalk. In Figure 4, 44 shows a cable intended for being introduced into one of connectors 4, 5, 21-26. The signals are taken out on pins 7 and 8, and by means of a transformer 45 the balanced signal is back-converted to an unbalanced signal on signal output 46. By means 10, 11 and 12, 13 (Figure 1) this unbalanced signal has a characteristic which remains the same irrespective of the lengths of the cables connecting the module 1 to the cable 44.

Moreover the module 1 contains a sensor 47 which is configured for detecting the presence of a DC signal on the wire 48. By means of a capacitor and a resistor it is ensured that the DC-level is higher than 0 when a cable 44 is not coupled to the connector which is connected to U1. The minute one connects a cable 44, the DC level on wire 48 will go to zero due to it being connected to a wire in the cable 44 which is, DC-wise, grounded. The minute the DC-level on a wire 48 becomes 0, the sensor 47 will emit a signal to a power supply 53 involving activation of the amplifier 42. In this manner it is accomplished that only the sensitive signals are emitted, ie signals with a certain frequency and/or a limited strength when a cable 44 is connected. Thereby undesired radiation/noise is reduced and power consumption is minimised.

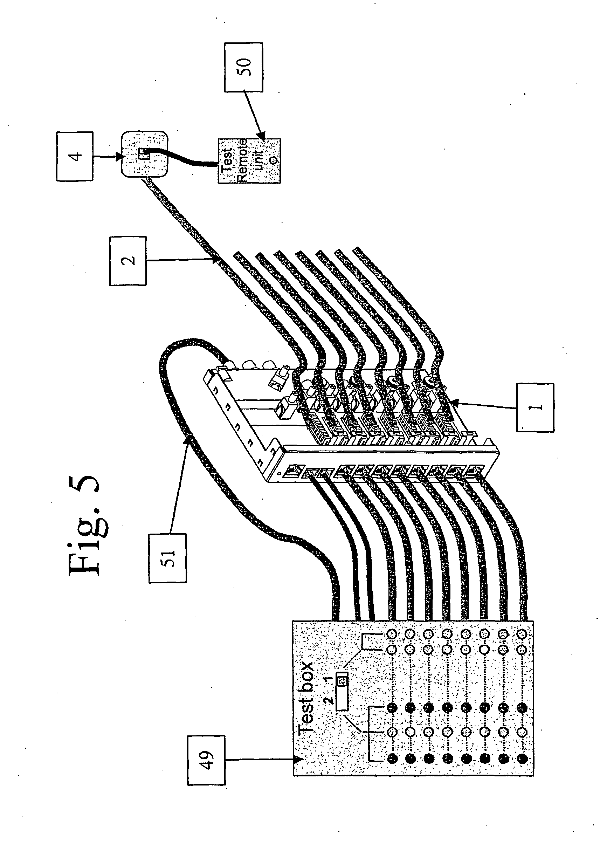

Figure 5 shows a test box 49 connected to a module 1 and a remote unit 50 connected to a connector 4. It will be understood that the other seven cables from the cable that are dead-ended are connected to respective connectors 5, 21-26, see Figure 2, and that in each of those connectors a respective remote unit is inserted (which is not shown in Figure 5). The test box 49 is configured for emitting at least two signals with different frequencies via a coaxial cable 51. The signals are detected in the remote unit 50, where it is checked whether the signal characteristics have the ideal course as outlined in box 17 in Figure 1. The remote unit 50 is configured for transmitting a message back via cable 2 to the test box, whereby it is possible to ascertain, on a display or the diodes indicated on the test box 49 whether there is an ideal adaptation between the module 1 and the connectors 4. By adjustment by the means 12 from Figure 1, it is thus possible to quickly adjust the output U1 by means of the test box 49 and the remote unit 50. Correspondingly the other outputs U2-U8 are adjusted.

## Claims

1. A module (1) for distributing communications signals to a plurality of connectors (4, 5) which are connected to the module (1) via a wiring network, which wiring network comprises a cable (2, 3) with a plurality of pairs of twisted wires, **characterised in that** the module comprises
• two or more output ports (U1, U2) comprising signal outputs that are permanently wired and connected to respective terminals (8) in some connectors (4, 5), and each of which comprises means (12, 13) for individual adaptation of a respective high-frequency input signal to a respective output signal,
• said output ports (U1, U6) comprising other signal outputs that are permanently wired to other respective terminals (6, 7) in said connectors (4, 5) for further coupling of one or more other input signals (11-18, 18, 19) to said connectors via the module, wherein the high-frequency input signals have a higher frequency than said other input signals.

2. A module according to claim 1, **characterised in that** the adaptation comprises individual adjustment of the amplification characteristics of each signal output.

3. A module according to claims 1 or 2, **characterised in that** the adaptation comprises conversion from unbalanced to balanced signals.

4. A module according to claim 3, **characterised in that** means are provided between the terminals of the connector and a receiver apparatus for back-conversion of the balanced signals.

5. A module according to claim 4, **characterised in that** the means are integrated into a connecting cable for connection between a connector and a receiver apparatus.

6. A module according to claims 1-5, **characterised in that** at least some of the high-frequency outputs are configured to emit signals only if it can be detected that a receiver is connected to the respective terminals in a connector.

7. A module according to claims 4-6, **characterised in that** the module comprises a detector for detecting a DC signal level and comprises means for turning on or turning off the high-frequency amplifier in response to the magnitude of the DC signal level relative to a threshold value.

8. A module according to claim 1, **characterised in that** the module comprises signal outputs for telephony signals, which outputs are permanently wired to respective terminals in said connectors; and that the module comprises selector means for selection between several telephony input signals.

9. A module according to claim 1, **characterised in that** the module comprises signal outputs for digital signals and comprises selector means for selecting from among several digital input signals.

10. A module according to claim 8 or 9, **characterised in that** the selector means are switches.

11. A module according to claim 8 or 9, **characterised in that** the selector means comprise a patch panel.

12. A module according to any one of the preceding claims, **characterised in that** signal outputs are configured to also serve as signal inputs and vice versa.

13. A module according to claims 1-12, **characterised in that** the module has a high-frequency input/output which is connected to a cable-TV modem.

14. A module according to claims 1-13, **characterised in that** the module has a telephony input/output which is connected to an ADSL filter.

15. A module according to claims 1-14, **characterised in that** the module has a telephone input/output which is connected to an alarm circuit.

16. A module according to claims 1-15, **characterised in that** the module has a telephony input/output connected to a VoIP (Voice over I/P) converter.

17. A module according to any one of claims 1-16, **characterised in that** a test box is available that is connected to the module; and that test units are provided that are connected to respective connectors, wherein the test box is configured for emitting signals with at least two different frequencies; and wherein each test unit is configured for transmitting response back to the test box about the received signals.

18. A module according to claim 17, **characterised in that** the response signals are transmitted from the test units to the test box via said wiring network in the building.

## Patentansprüche

1. Modul (1) zur Verteilung von Kommunikationssignalen auf mehrere Verbinder (4, 5), die über ein Verdrahtungsnetz mit dem Modul (1) verbunden sind, wobei das Verdrahtungsnetz ein Kabel (2, 3) mit mehreren Paaren verdrillten Drähten umfasst, **dadurch gekennzeichnet, dass** das Modul Folgendes umfasst:
- zwei oder mehr Ausgangsports (U1, U2), die Signalausgänge umfassen, welche mit jeweiligen Anschlüssen (8) in einigen Verbindern (4, 5) fest verbunden sind und die jeweils Mittel (12, 13) zur individuellen Anpassung eines jeweiligen Hochfrequenzeingangssignals an ein jeweiliges Ausgangssignal umfassen,
- wobei die Ausgangsports (U1, U2) andere Signalausgänge umfassen, die mit jeweiligen anderen Anschlüssen (6, 7) in den Verbindern (4, 5) fest verbunden sind, um ein oder mehrere andere Eingangssignale (11-18, 18, 19) über das Modul weiter zu den Verbindern zu koppeln, wobei die Hochfrequenzeingangsignale eine höhere Frequenz aufweisen als die anderen Eingangssignale.

2. Modul nach Anspruch 1, **dadurch gekennzeichnet, dass** die Anpassung eine individuelle Einstellung der Verstärkungseigenschaften jedes Signalausgangs umfasst.

3. Modul nach Anspruch 1 oder 2, **dadurch gekennzeichnet, dass** die Anpassung eine Umsetzung von unsymmetrischen in symmetrische Signale umfasst.

4. Modul nach Anspruch 3, **dadurch gekennzeichnet, dass** Mittel zwischen den Anschlüssen des Verbinders und einer Empfängervorrichtung zur Rückumsetzung der symmetrischen Signale vorgesehen sind.

5. Modul nach Anspruch 4, **dadurch gekennzeichnet, dass** die Mittel in ein Verbindungskabel zur Verbindung zwischen einem Verbinder und einer Empfängervorrichtung integriert sind.

6. Modul nach den Ansprüchen 1 - 5, **dadurch gekennzeichnet, dass** mindestens ein Teil der Hochfrequenzausgänge dazu konfiguriert sind, nur dann Signale abzugeben, wenn erfasst werden kann, dass ein Empfänger mit den jeweiligen Anschlüssen in einem Verbinder verbunden ist.

7. Modul nach den Ansprüchen 4 - 6, **dadurch gekennzeichnet, dass** das Modul einen Detektor zum Erfassen eines Gleichstromsignalpegels sowie Mittel zum Ein- oder Abschalten des Hochfrequenzverstärkers als Reaktion auf die Höhe des Gleichstromsignalpegels bezüglich eines Schwellwerts umfasst.

8. Modul nach Anspruch 1, **dadurch gekennzeichnet, dass** das Modul Signalausgänge für Fernsprechsignale umfasst, wobei die Ausgänge mit jeweiligen Anschlüssen in den Verbindern fest verdrahtet sind, und dass das Modul Wählmittel zum Wählen zwischen mehreren Fernsprecheingangssignalen umfasst.

9. Modul nach Anspruch 1, **dadurch gekennzeichnet, dass** das Modul Signalausgänge für digitale Signale sowie Wählmittel zum Auswählen aus mehreren digitalen Eingangssignalen umfasst.

10. Modul nach Anspruch 8 oder 9, **dadurch gekennzeichnet, dass** die Wählmittel Schalter sind.

11. Modul nach Anspruch 8 oder 9, **dadurch gekennzeichnet, dass** die Wählmittel eine Schalttafel umfassen.

12. Modul nach einem der vorhergehenden Ansprüche, **dadurch gekennzeichnet, dass** die Signalausgänge dazu konfiguriert sind, auch als Signaleingänge zu dienen, und umgekehrt.

13. Modul nach den Ansprüchen 1 - 12, **dadurch gekennzeichnet, dass** das Modul einen Hochfrequenzeingang/- ausgang aufweist, der mit einem Kabelfernsehmodem verbunden ist.

14. Modul nach den Ansprüchen 1 - 13, **dadurch gekennzeichnet, dass** das Modul einen Fernsprecheingang/- ausgang aufweist, der mit einem ADSL-Filter verbunden ist.

15. Modul nach den Ansprüchen 1 - 14, **dadurch gekennzeichnet, dass** das Modul einen Fernsprecheingang/- ausgang aufweist, der mit einer Alarmschaltung verbunden ist.

16. Modul nach den Ansprüchen 1 - 15, **dadurch gekennzeichnet, dass** das Modul einen Fernsprecheingang/- ausgang aufweist, der mit einem VoIP-Konverter (VoIP-Voice over I/P) verbunden ist.

17. Modul nach einem der Ansprüche 1 - 16, **dadurch gekennzeichnet, dass** eine Testbox zur Verfügung steht, die mit dem Modul verbunden ist, und dass Testeinheiten vorgesehen sind, die mit jeweiligen Verbindern verbunden sind, wobei die Testbox dazu konfiguriert ist, Signale mit mindestens zwei verschiedenen Frequenzen abzugeben, und wobei jede Testeinheit zum Zurücksenden einer Antwort zu der Testbox über die empfangenen Signale konfiguriert ist.

18. Modul nach Anspruch 17, **dadurch gekennzeichnet, dass** die Antwortsignale von den Testeinheiten über das Verdrahtungsnetz in dem Gebäude zu der Testbox übertragen werden.

## Revendications

1. Module (1) pour distribuer des signaux de communication à une pluralité de connecteurs (4, 5) qui sont connectés au module (1) par le biais d'un réseau de câblage, lequel réseau de câblage comprend un câble (2, 3) avec une pluralité de paires de fils torsadés, **caractérisé en ce que** le module comprend
* deux ports de sortie (U1, U2) ou plus comprenant des sorties de signal qui sont câblées en permanence et connectées à des bornes (8) respectives dans certains connecteurs (4, 5) et qui comprennent chacune des moyens (12, 13) d'adaptation individuelle d'un signal d'entrée à haute fréquence correspondant à un signal de sortie correspondant,
* lesdits ports de sortie (U1, U2) comprenant d'autres sorties de signal qui sont câblées en permanence à d'autres bornes (6, 7) respectives dans lesdits connecteurs (4, 5) pour la connexion supplémentaire d'un ou plusieurs autres signaux d'entrée (I1-I8, 18, 19) auxdits connecteurs par le biais du module, les signaux d'entrée à haute fréquence ayant une fréquence supérieure auxdits autres signaux d'entrée.

2. Module selon la revendication 1, **caractérisé en ce que** l'adaptation comprend l'ajustement individuel des caractéristiques d'amplification de chaque sortie de signal.

3. Module selon les revendications 1 ou 2, **caractérisé en ce que** l'adaptation comprend la conversion de signaux non symétriques en signaux symétriques.

4. Module selon la revendication 3, **caractérisé en ce qu'**il existe des moyens entre les bornes du connecteur et un appareil récepteur pour la reconversion des signaux symétriques.

5. Module selon la revendication 4, **caractérisé en ce que** les moyens sont intégrés dans un câble de raccordement pour réaliser une connexion entre un connecteur et un appareil récepteur.

6. Module selon les revendications 1 à 5, **caractérisé en ce qu'**au moins certaines des sorties à haute fréquence sont configurées pour émettre des signaux uniquement s'il est possible de détecter qu'un récepteur est connecté aux bornes correspondantes dans un connecteur.

7. Module selon les revendications 4 à 6, **caractérisé en ce que** le module comprend un détecteur pour détecter un niveau de signal CC et comprend des moyens pour mettre en marche ou arrêter l'amplificateur à haute fréquence en réaction à l'amplitude du niveau de signal CC par rapport à une valeur de seuil.

8. Module selon la revendication 1, **caractérisé en ce que** le module comprend des sorties de signal pour des signaux de téléphonie, lesquelles sorties sont câblés en permanence aux bornes respectives dans lesdits connecteurs ; et **en ce que** le module comprend des moyens de sélection pour effectuer une sélection entre plusieurs signaux d'entrée de téléphonie.

9. Module selon la revendication 1, **caractérisé en ce que** le module comprend des sorties de signal pour des signaux numériques et comprend des moyens de sélection pour effectuer une sélection entre plusieurs signaux d'entrée numériques.

10. Module selon la revendication 8 ou 9, **caractérisé en ce que** les moyens de sélection sont des commutateurs.

11. Module selon la revendication 8 ou 9,
**caractérisé en ce que** les moyens de sélection comprennent un tableau de connexion.

12. Module selon l'une quelconque des revendications précédentes, **caractérisé en ce que** les sorties de signal sont configurées pour servir également d'entrées de signal et inversement.

13. Module selon les revendications 1 à 12, **caractérisé en ce que** le module possède une entrée/sortie à haute fréquence qui est connectée à un modem de télévision par câble.

14. Module selon les revendications 1 à 13, **caractérisé en ce que** le module possède une entrée/sortie de téléphonie qui est connectée à un filtre ADSL.

15. Module selon les revendications 1 à 14, **caractérisé en ce que** le module possède une entrée/sortie de téléphonie qui est connectée à un circuit d'alarme.

16. Module selon les revendications 1 à 15, **caractérisé en ce que** le module possède une entrée/sortie de téléphonie qui est connectée à un convertisseur VoIP (Voix sur IP).

17. Module selon l'une quelconque des revendications 1 à 16, **caractérisé en ce qu'**il existe un boîtier de test qui est connecté au module ; et qu'il existe des unités de test qui sont connectées aux connecteurs correspondants, le boîtier de test étant configuré pour émettre des signaux avec au moins deux fréquences différentes ; et chaque unité de test étant configurée pour renvoyer vers le boîtier de test la réponse à propos des signaux reçus.

18. Module selon la revendication 17, **caractérisé en ce que** les signaux de réponse sont émis depuis les unités de test vers le boîtier de test par le biais dudit réseau de câblage dans le bâtiment.
